# EUROPEAN PATENT APPLICATION

(11) **EP 4 607 865 A1**
(43) Date of publication of application: **27.08.2025**
(21) Application number: 22962445.7
(22) Date of filing: 21.10.2022
(51) Int. Cl.: H04L 27/00, H04W 60/00

(54) **MODEL MANAGEMENT METHOD AND APPARATUS, AND DEVICE AND MEDIUM**

(71) Applicant: Beijing Xiaomi Mobile Software Co., Ltd., Beijing 100085 (CN)
(72) Inventor: LI, Xiaolong, Beijing 100085 (CN)
(74) Representative: Dehns Germany Partnerschaft mbB
(86) International application number: PCT/CN2022/126643
(87) International publication number: WO 2024/082261

(57) **Abstract**

The present application relates to the field of mobile communications. Disclosed are a model management method and apparatus, and a device and a medium. The method comprises: sending an artificial intelligence (AI) positioning model registration message, wherein the AI positioning model registration message is used for registering, to a network, an AI positioning model for a terminal, and the AI positioning model is applied to a positioning process. The method is convenient for a network to manage an AI positioning model, which is locally deployed in a terminal.

## Description

### TECHNICAL FIELD

The present disclosure relates to a field of mobile communication technology, and specifically to a method and an apparatus for model management, a device, and a medium.

### BACKGROUND

5th generation (5G) new radio (NR) intends to study artificial intelligence (AI) and apply the AI to the 5G NR, for example, AI-based positioning.

For the AI-based positioning, an AI model may be deployed on a user equipment (UE)/terminal side, an access network device side, or a location management function (LMF) network element side. For example, for downlink positioning, the UE may calculate its position, or the LMF may calculate a position of the UE. Therefore, an AI function may be deployed in either the LMF or the UE.

When the AI model for positioning is deployed on a UE side, the AI model may be private to the UE or obtained by the UE via a third party, that is, the access network device and/or the LMF does not have information about the AI model deployed on the UE side, so the access network device and the LMF may not manage the AI model deployed on the UE side.

### SUMMARY

Embodiments of the present disclosure provide a method and an apparatus for model management, a device, and a medium. The technical solution is as follows.

According to an aspect of the present disclosure, a method for model management is provided, performed by a terminal, including:
sending a registration message of an artificial intelligence (AI) positioning model, in which the registration message of the AI positioning model is configured to register the AI positioning model of the terminal with a network, in which the AI positioning model is applied to a positioning process.

According to an aspect of the present disclosure, a method for model management is provided, performed by a location management function (LMF) network element, including:
receiving a registration message of an AI positioning model, in which the registration message of the AI positioning model is configured to register the AI positioning model of a terminal with a network, in which the AI positioning model is applied to a positioning process.

According to an aspect of the present disclosure, a method for model management is provided, performed by an access and mobility management function (AMF) network element, including:
receiving a registration message of an AI positioning model, in which the registration message of the AI positioning model is configured to register the AI positioning model of a terminal with a network, in which the AI positioning model is applied to a positioning process.

According to an aspect of the present disclosure, a method for model management is provided, performed by an access network device, including:
receiving a registration message of an AI positioning model, in which the registration message of the AI positioning model is configured to register the AI positioning model of a terminal with a network, in which the AI positioning model is applied to a positioning process.

According to another aspect of the present disclosure, an apparatus for model management is provided, including:
a first sending module, configured to send a registration message of an AI positioning model, in which the registration message of the AI positioning model is configured to register the AI positioning model of the terminal with a network, in which the AI positioning model is applied to a positioning process.

According to another aspect of the present disclosure, an apparatus for model management is provided, including:
a second receiving module, configured to receive a registration message of an AI positioning model, in which the registration message of the AI positioning model is configured to register the AI positioning model of a terminal with a network, in which the AI positioning model is applied to a positioning process.

According to another aspect of the present disclosure, an apparatus for model management is provided, including:
a third receiving module, configured to receive a registration message of an AI positioning model, in which the registration message of the AI positioning model is configured to register the AI positioning model of a terminal with a network, in which the AI positioning model is applied to a positioning process.

According to another aspect of the present disclosure, an apparatus for model management is provided, including:
a fourth receiving module, configured to receive a registration message of an AI positioning model, in which the registration message of the AI positioning model is configured to register the AI positioning model of a terminal with a network, in which the AI positioning model is applied to a positioning process.

According to another aspect of the present disclosure, a terminal is provided, including: a processor; a transceiver connected to the processor; and a memory for storing instructions executable by the processor, in which the processor is configured to load and execute the instructions to implement the method in above aspects.

According to another aspect of the present disclosure, an LMF network element is provided, including: a processor; a transceiver connected to the processor; and a memory for storing instructions executable by the processor, in which the processor is configured to load and execute the instructions to implement the method in above aspects.

According to another aspect of the present disclosure, an AMF network element is provided, including: a processor; a transceiver connected to the processor; and a memory for storing instructions executable by the processor, in which the processor is configured to load and execute the instructions to implement the method in above aspects.

According to another aspect of the present disclosure, an access network device is provided, including: a processor; a transceiver connected to the processor; and a memory for storing instructions executable by the processor, in which the processor is configured to load and execute the instructions to implement the method in above aspects.

According to another aspect of the present disclosure, a computer readable storage medium for storing executable instructions is provided, in which when the executable instructions are loaded and executed by a processor, the method in above aspects is implemented.

According to another aspect of the present disclosure, a chip is provided, including: a programmable logic circuit and/or a program instruction, in which when the chip is running on a computer device, the method in above aspects is implemented.

According to another aspect of the present disclosure, a computer program product or a computer program including computer instructions is provided, in which the computer instructions are stored in a computer readable storage medium from which a processor reads and executes the computer instructions to cause a computer device to perform the method in above aspects.

According to another aspect of the present disclosure, a communication method is provided, including:
sending by an AMF network element, a registration message of an AI positioning model to an LMF network element, in which the registration message of the AI positioning model is configured to register the AI positioning model of a terminal with a network, in which the AI positioning model is applied to a positioning process; and
receiving by the LMF network element, the registration message of the AI positioning model of the terminal sent by the AMF network element.

According to another aspect of the present disclosure, a communication system is provided, including:
an LMF network element, configured to implement the method in above aspects; and
an AMF network element, configured to implement the method in above aspects.

The technical solution in the present disclosure includes at least following beneficial effects:
By sending the registration message of the AI positioning model to the network side, the terminal registers the AI positioning model locally deployed on the terminal with the network, so that the network side may obtain relevant information about the AI positioning model deployed locally on the terminal, which facilitates the network side to manage the AI positioning model deployed on the terminal.

### BRIEF DESCRIPTION OF THE DRAWINGS

In order to clearly illustrate technical solutions of embodiments of the present disclosure, a brief description of drawings used in embodiments is given below. Obviously, the drawings in the following descriptions are only part embodiments of the present disclosure, and for those skilled in the art, other drawings may be obtained according to these drawings without creative labor.
FIG. 1 is a schematic diagram of a communication system according to an exemplary embodiment of the present disclosure.
FIG. 2 is a schematic diagram of a network architecture according to an exemplary embodiment of the present disclosure.
FIG. 3 is a flowchart of a method for model management according to an exemplary embodiment of the present disclosure.
FIG. 4 is a flowchart of a method for model management according to an exemplary embodiment of the present disclosure.
FIG. 5 is a flowchart of a method for model management according to an exemplary embodiment of the present disclosure.
FIG. 6 is a flowchart of a method for model management according to an exemplary embodiment of the present disclosure.
FIG. 7 is a flowchart of a method for model management according to an exemplary embodiment of the present disclosure.
FIG. 8 is a flowchart of a method for model management according to an exemplary embodiment of the present disclosure.
FIG. 9 is a flowchart of a method for model management according to an exemplary embodiment of the present disclosure.
FIG. 10 is a flowchart of a method for model management according to an exemplary embodiment of the present disclosure.
FIG. 11 is a flowchart of a method for model management according to an exemplary embodiment of the present disclosure.
FIG. 12 is a block diagram of an apparatus for model management according to an exemplary embodiment of the present disclosure.
FIG. 13 is a block diagram of an apparatus for model management according to an exemplary embodiment of the present disclosure.
FIG. 14 is a block diagram of an apparatus for model management according to an exemplary embodiment of the present disclosure.
FIG. 15 is a block diagram of an apparatus for model management according to an exemplary embodiment of the present disclosure.
FIG. 16 is a flowchart of a communication method according to an exemplary embodiment of the present disclosure.
FIG. 17 is a block diagram of a communication system according to an exemplary embodiment of the present disclosure.
FIG. 18 is a block diagram of a communication device according to an exemplary embodiment of the present disclosure.

### DETAILED DESCRIPTION

In order to make a purpose, a technical solution and an advantage of the present disclosure more clear, implementations of the present disclosure will be further described in detail in combination with attached drawings.

Reference will now be made in detail to example embodiments, examples of which are illustrated in the accompanying drawings. The following description refers to the accompanying drawings in which the same numbers in different drawings represent the same or similar elements unless otherwise represented. The implementations set forth in the following description of example embodiments do not represent all implementations consistent with the present disclosure. Instead, they are merely examples of apparatuses and methods consistent with some aspects related to the present disclosure as recited in the appended claims.

The terms used in embodiments of the present disclosure are solely for the purpose of describing a particular embodiment and are not intended to limit embodiments of the present disclosure. The terms "a/an" and "the" in a singular form used in embodiments and claims of the present disclosure are also intended to include a plural form, unless the context clearly indicates other meaning. It may also be understood that the term "and/or" as used herein refers to any or all possible combinations of one or more associated listed items.

It may be understood that although the terms first, second, third, etc. may be used to describe various information in the present disclosure, such information should not be limited to these terms. These terms are used only to distinguish information in the same type from one another. For example, without departing from the scope of the present disclosure, the first information may also be referred to as the second information, and similarly, the second information may be referred to as the first information. Depending on the context, words "if" and "in case that" used here may be interpreted as "when", "while", or "in response to determining...".

Firstly, related arts in the embodiments of the present disclosure are introduced below.

5th generation (5G) new radio (NR) intends to study artificial intelligence (AI) and apply the AI to the 5G NR, for example, AI-based positioning.

For the AI-based positioning, an AI model may be deployed on a user equipment/terminal (UE) side, an access network device side, or a location management function (LMF) network element side.

In addition, there may be a plurality of AI models for positioning, different AI models are applied to different positioning application scenarios, or correspond to different positioning requirements. That is, for different positioning application scenarios, different data sets are used to train the AI models, so as to obtain different AI models for positioning different application scenarios.

For example, for downlink positioning, the UE may calculate its position, or the LMF may calculate a position of the UE. Therefore, an AI function may be deployed in either the LMF or the UE.

When the AI model for positioning is deployed on a UE side, the AI model may be private to the UE or obtained by the UE via a third party, that is, the access network device and/or the LMF does not have information about the AI model deployed on the UE side, so a next generation node B (gNB) and the LMF may not manage the AI model deployed on the UE side.

Therefore, the embodiments of the present disclosure provide a method for model management so that the terminal registers an AI positioning model deployed locally with a network side, which facilitates the network side to manage the AI positioning model deployed on the terminal.

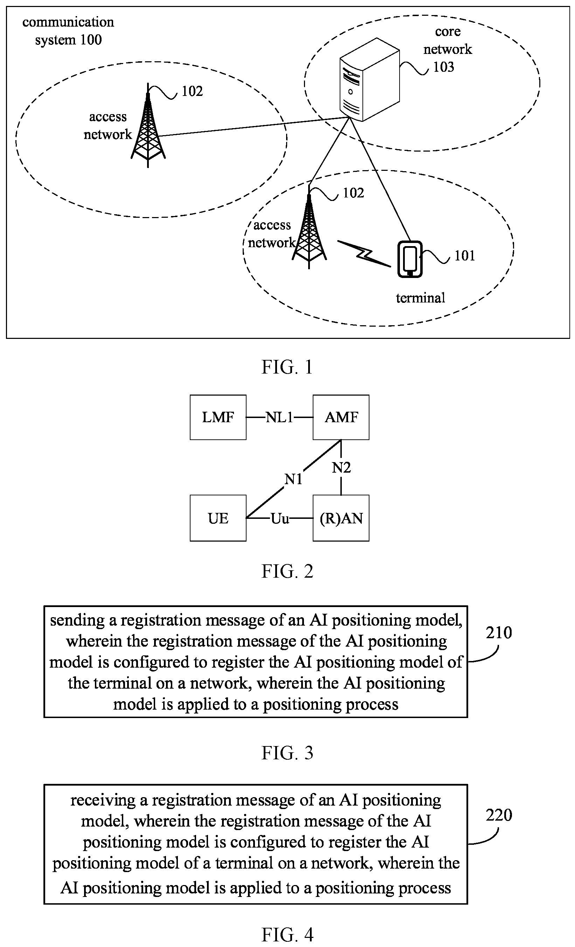

FIG. 1 is a schematic diagram of a communication system according to an exemplary embodiment of the present disclosure. The communication system 100 may include: a terminal 101, an access network device 102 and a core network device 103.

There are usually a plurality of terminals 101, and one or more terminals 101 may be distributed in a cell managed by each access network device 102. The terminal 101 may include a variety of handheld devices, vehicle-mounted devices, wearable devices, computing devices with a wireless communication function, or other processing devices connected to wireless modems, and various forms of user equipment (UE), mobile stations (MS), etc. For a convenient description, the devices mentioned above in the embodiments of the disclosure are collectively referred to as terminal.

The access network device 102 is a device deployed in an access network that provides a wireless communication function for the terminal 101. The access network device 102 may include various forms of macro base stations, micro base stations, relay stations, access points. In systems adopting different radio access technologies, a name of the device that has the function of the access network device may be different, such as gNodeB or gNB in the 5G NR system. As the communication technology evolves, the name "access network device" may change. For a convenient description, in the embodiments of the disclosure, the above devices that provide the wireless communication function for the terminal 101 are collectively referred to as access network device. A connection may be established between the access network device 102 and the terminal 101 via a radio interface, so that communication, including a signaling interaction and a data interaction is performed through the connection. There may be a plurality of access network devices 102, and two adjacent access network devices 102 may also communicate with each other in a wired or wireless manner. The terminal 101 may switch between different access network devices 102, that is, establishing connections with different access network devices 102. Optionally, the access network device has at least one transmission reception point (TRP). The access network device communicates with the terminal via the TRP.

The core network device 103 mainly provides user connections, manages users, carries a service, and provides an interface to an external network as a bearer network. The access network device 102 and the core network device 103 may be collectively referred to as the network device. Exemplarily, the network device in the embodiments of the present disclosure may refer to the access network device. The core network device 103 and the access network device 102 communicate with each other by a certain technology. A communication relationship between the terminal 101 and the core network device 103 may be established via the access network device 102. Exemplarily, the core network devices in the embodiments of the present disclosure include an LMF network element and an access and mobility management function (AMF) network element.

"5G NR system" in the embodiments of the present disclosure may also be referred to as a 5G system or an NR system, which may be understood by those skilled in the art. The technical solution in the embodiments of the disclosure may be applied to the 5G NR system or a subsequent evolution system of the 5G NR system.

FIG. 2 is a schematic diagram of a network architecture according to an exemplary embodiment of the present disclosure. As shown in FIG. 2, a 5G network architecture published by a 3rd generation partnership project (3GPP) standard group includes:

a terminal, an access network device (including a radio access network (RAN) or an access network (AN)), an AMF network element and an LMF network element supporting the 3GPP technology.

It may be understood by those skilled in the art that the 5G network architecture shown in FIG. 2 does not limit the 5G network architecture. In actual implementations, the 5G network architecture may include more or fewer network elements than shown in FIG. 2, or in combination with certain network elements. It should be understood that the AN or the RAN is represented by (R)AN in FIG. 2.

The terminal may be user equipment (UE), a handheld terminal, a laptop, a subscriber unit, a cellular phone, a smart phone, a wireless data card, a personal digital assistant (PDA), a tablet, a wireless modem, a handheld device, a laptop computer, a cordless phone, a wireless local loop (WLL), a machine type communication (MTC) terminal, a handheld device with a wireless communication capability, a computing device, a processing device connected to a wireless modem, a drone, a vehicle-mounted device, a wearable device, a terminal in Internet of Things, a virtual reality device, a terminal in a future 5G network, and a future evolving terminal in a public land mobile network (PLMN), etc.

The access network device is an access device that the terminal accesses to the network architecture in a wireless manner, which is mainly responsible for radio resource management, quality of service (QoS) management, data compression and encryption on the radio interface side, for example, a base station NodeB, an evolved base station eNodeB, a base station in a 5G mobile communication system or an NR communication system, a base station in a future mobile communication system, etc.

The AMF network element and the LMF network element are network elements of a 3GPP core network (a core network network element for short). The AMF network element, being called a control plane function network element, is responsible for authentication, authorization, registration management, session management, mobility management, and policy control to ensure reliable and stable transmission of user data.

The AMF network element may be used to manage a terminal access to a core network, such as, update a location of the terminal, register with a network, control an access, perform mobility management on the terminal, and attach and detach the terminal. When the AMF network element provides a service for a session of the terminal, the AMF network element may also provide a storage resource of a control plane for the session, to store a session identifier and a SMF network element identifier associated with the session identifier, etc.

The LMF network element manages coordination and scheduling of overall resources required for a location of the UE registered with or accessed to a 5G core network (CN), calculates and authenticates a final location, estimates a speed and may make estimation of an achievable accuracy. The LMF obtains a positioning request for a target UE from a service AMF via an Nlmf interface, interacts with the UE to exchange location information suitable for a UE-assisted and UE-based positioning method, and interacts with a next generation-radio access network (NG-RAN) to obtain the location information. The LMF network element shall determine a geographic coordinate in a location result based on a 3GPP TS 23.032 definition. If it is requested and available, the location result may include a UE speed simultaneously. An additional function that may be performed by the LMF to support a positioning service includes: a) supporting to receive a positioning request from the service AMF for the target UE for a single location; b) supporting to receive a periodic or triggered positioning request from the service AMF for the target UE; c) determining a positioning method based on a UE capability and a PLMN capability, a QoS, a UE connection state per access type, and a client type of a location service client (LCS); d) reporting a UE location estimation directly to a gateway mobile location centre (GMLC) for periodic or triggered positioning of one UE; e) supporting to cancel periodic or triggered positioning for the target UE; f) supporting a delivery of broadcast secondary data in an encrypted or unencrypted form to the UE via the NG-RAN and forwarding any encryption key to a subscribed UE via the AMF; and g) supporting to change the LMF for a periodic or triggered location report of the target UE.

Any network element in FIG. 2 may be either a network component in a hardware device, a software function running on a dedicated hardware, or a virtualization function instantiated on a platform (e.g., a cloud platform). It needs to be noted that the network architecture shown in the above figure is only an example to illustrate network elements included in an entire network architecture, which are not limited in the embodiments of the present disclosure.

FIG. 3 is a flowchart of a method for model management according to an exemplary embodiment of the present disclosure. The method may be performed by a terminal, including S210.

**At S210,** a registration message of an AI positioning model is sent, in which the registration message of the AI positioning model is configured to register the AI positioning model of the terminal with a network, in which the AI positioning model is applied to a positioning process.

Optionally, the terminal sends the registration message of the AI positioning model to a network device, in which the network device includes at least one of an access network device, an AMF network element, or an LMF network element.

Optionally, the registration message of the AI positioning model sent by the terminal to the LMF network element may be carried in a mobile originated-location request (MO-LR), or a long term evolution positioning protocol (LPP) message.

Optionally, the registration message of the AI positioning model sent by the terminal to the AMF network element may be carried in a registration request, in which the registration request is a registration request sent by the terminal when the terminal registers on a network; or be carried in a supplementary service message.

Optionally, the registration message of the AI positioning model sent by the terminal to the access network device is carried in a radio resource control (RRC) message, for example, in positioning assistance information.

The AI positioning model is an AI model or a neural network model deployed on the terminal and used in a positioning process. The positioning process includes: an uplink positioning process, a downlink positioning process, and an uplink and downlink positioning process. The AI positioning model may also be called a positioning model, an AI model, a neural network model, etc. The name of the model is not limited in the embodiments of the present disclosure. Correspondingly, the registration message of the AI positioning model may also be called an AI model registration message, a model registration message, and so on.

Optionally, different AI positioning models have different functions. For example, some AI positioning models may be used to generate measurement data, some AI positioning model may be used to calculate a positioning result based on the measurement data, some AI positioning model may be used to correct an error in the measurement data, some AI positioning model may be used to adjust a relevant parameter of the positioning process, and some AI positioning model may be used to encode and decode a transmission message in the positioning process. The embodiments of the present disclosure does not limit a function of the AI positioning model, and those skilled in the art may classify the AI positioning models used in the positioning process from any functional dimension.

Optionally, different AI positioning models may have different application scenarios. For example, some AI positioning models may be applied to indoor positioning scenarios, some AI positioning models may be applied to outdoor positioning scenarios, some AI positioning models may be applied to high-speed mobile positioning scenarios, and some AI positioning models may be applied to satellite positioning scenarios. The embodiments of the present disclosure does not limit application scenarios of the AI positioning model, and those skilled in the art may classify the AI positioning models used in the positioning process from any application scenario dimension.

Optionally, the terminal may deploy a plurality of AI positioning models locally, and the registration message of the AI positioning model is used to register at least one AI positioning model deployed locally on the terminal with the network.

Optionally, the registration message of the AI positioning model includes at least one of:
a function of the AI positioning model;
a version of the AI positioning model;
an identifier of the AI positioning model; or
an application scenario of the AI positioning model.

Optionally, the registration message of the AI positioning model includes model information corresponding to at least one AI positioning model. The model information includes at least one of the function of the AI positioning model, the version of the AI positioning model, the identifier of the AI positioning model, or the application scenario of the AI positioning model.

A classification of the functions of the AI positioning model may be arbitrary, for example, the function of the AI positioning model may include: a measurement function, a positioning calculation function, a positioning parameter determination function, an error correction function, a encoding and decoding function, and so on. The embodiments of the present disclosure only take the classification of above functions as an example, and a specific classification method of the above functions may be implemented by agreements in a protocol or by a terminal. The registration message of the AI positioning model may include a function identifier of the AI positioning model, and different function identifiers are used to indicate different functions.

The version of the AI positioning model may be a version number of the AI positioning model, or a version identifier of the AI positioning model. The version of the AI positioning model may identify different versions of a same AI positioning model. For example, for an AI positioning calculation model, an original version is 1.0, and after upgrading a model parameter of the AI positioning calculation model, a new generation version is 2.0. The original AI positioning calculation model and the new generation AI positioning calculation model have a same identifier (model identifier), but they correspond to different versions: 1.0 and 2.0.

The identifier of the AI positioning model is used to indicate the AI positioning model, and different AI positioning models have different identifiers. For example, the AI positioning calculation model and an AI positioning measurement model have their own identifiers, for example, an identifier of the AI positioning calculation model is 1, and an identifier of the AI positioning measurement model is 2.

A classification of the application scenarios of the AI positioning model may also be arbitrary. For example, the scenarios of the AI positioning model may include: an indoor positioning scenario, an outdoor positioning scenario, an underground positioning scenario, a high-speed mobile positioning scenario, a satellite positioning scenario, and so on. The classification of the application scenarios is only used as an example of the embodiments of the present disclosure. A classification method of the application scenarios may be implemented by agreements in a protocol or by a terminal. The registration message of the AI positioning model may include an application scenario identifier of the AI location positioning, and different application scenario identifiers indicate different application scenarios.

Optionally, the terminal sends the registration message of the AI positioning model to the network device before performing the positioning process. Optionally, the terminal sends the registration message of the AI positioning model to the network device in the positioning process.

Optionally, the terminal may actively send the registration message of the AI positioning model to the network device, to report the AI positioning model deployed locally to the network device.

Optionally, the terminal may send the registration message of the AI positioning model to the network device in response to an obtaining request of the model information sent by the network device. For example, if the obtaining request of the model information may indicate to obtain an AI positioning model with a certain function and a certain application scenario, the terminal sends a registration message of the AI positioning model with the function and the application scenario to the network device.

**In** summary, in the method of the embodiments of the present disclosure, the terminal registers an AI positioning model deployed locally on the terminal with the network by sending the registration message of the AI positioning model to the network side, so that the network side may obtain relevant information about the AI positioning model deployed locally on the terminal, which facilitates the network side to manage the AI positioning model deployed on the terminal.

FIG. 4 is a flowchart of a method for model management according to an exemplary embodiment of the present disclosure. This method may be applied to a network device, including at least one of an access network device, an LMF network element, or an AMF network element. The method includes S220.

At S220, a registration message of an AI positioning model is received, in which the registration message of the AI positioning model is configured to register the AI positioning model of a terminal with a network, in which the AI positioning model is applied to a positioning process.

Optionally, the network device receives the registration message of the AI positioning model sent by the terminal. The network device includes at least one of the access network device, the LMF network element, or the AMF network element.

Optionally, the registration message of the AI positioning model received by the LMF network element from the terminal may be carried in an MO-LR or an LPP message.

Optionally, the registration message of the AI positioning model received by the AMF network element from the terminal may be carried in a registration request or in a supplementary service message.

Optionally, the registration message of the AI positioning model received by the access network device from the terminal is carried in an RRC message, for example, in positioning assistance information.

The AI positioning model is an AI model or a neural network model deployed on the terminal and used in a positioning process. The positioning process includes: an uplink positioning process, a downlink positioning process, and an uplink and downlink positioning process. The AI positioning model may also be called a positioning model, an AI model, a neural network model, etc. The name of the model is not limited in the embodiments of the present disclosure. Correspondingly, the registration message of the AI positioning model may also be called an AI model registration message, a model registration message, and so on.

Optionally, the terminal may deploy a plurality of AI positioning models locally, and the registration message of the AI positioning model is used to register at least one AI positioning model deployed locally on the terminal with the network.

Optionally, the registration message of the AI positioning model includes at least one of:
a function of the AI positioning model;
a version of the AI positioning model;
an identifier of the AI positioning model; or
an application scenario of the AI positioning model.

Optionally, the registration message of the AI positioning model includes model information corresponding to at least one AI positioning model. The model information includes at least one of the function of the AI positioning model, the version of the AI positioning model, the identifier of the AI positioning model, or the application scenario of the AI positioning model.

In summary, in the method of the embodiments of the present disclosure, the terminal registers an AI positioning model deployed locally on the terminal with the network by sending the registration message of the AI positioning model to the network side, so that the network side may obtain relevant information about the AI positioning model deployed locally on the terminal, which facilitates the network side to manage the AI positioning model deployed on the terminal.

Exemplarily, the embodiments of the present disclosure provide following methods for the terminal to register the AI positioning model.
**1. The terminal registers the AI positioning model with the LMF network element.**
**2. The terminal registers the AI positioning model with the AMF network element.**
2.1 The AMF network element sends the registration message of the AI positioning model to the LMF network element.
**3. The terminal registers the AI positioning model with the access network device.**
3.1 The access network device sends the registration message of the AI positioning model of the terminal to the LMF network element.
3.2 The access network device sends the registration message of the AI positioning model of the terminal to the AMF network element.
3.2.1 The AMF network element sends the registration message of the AI positioning model of the terminal to the LMF network element.

The above methods for registering the AI positioning model by the terminal are described below.
**1. The terminal registers the AI positioning model with the LMF network element.**

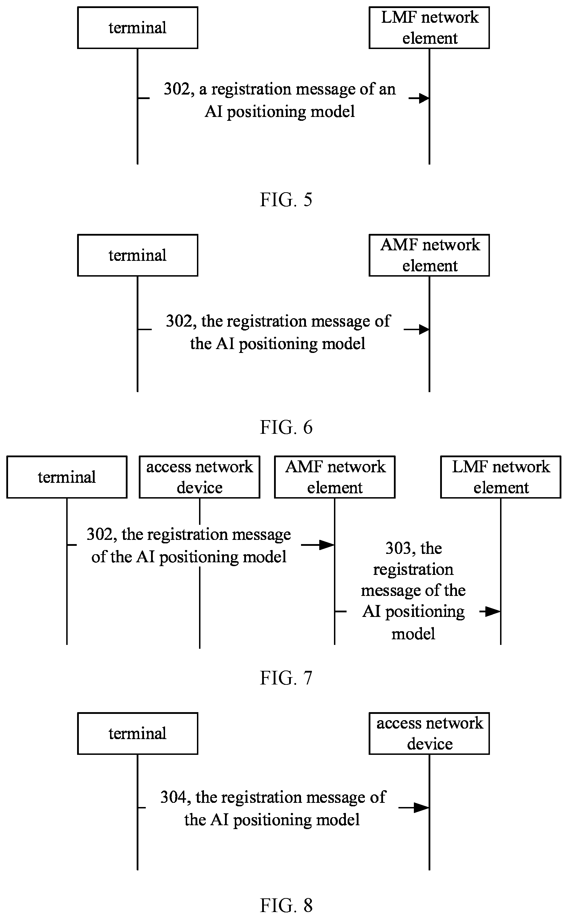

FIG. 5 is a flowchart of a method for model management according to an exemplary embodiment of the present disclosure. This method may be applied to a terminal and an LMF network element. The method includes S301.

At **S301,** the terminal sends a registration message of an AI positioning model to the LMF network element, in which the registration message of the AI positioning model is configured to register the AI positioning model of the terminal with a network, in which the AI positioning model is applied to a positioning process.

The LMF network element receives the registration message of the AI positioning model sent by the terminal.

Optionally, the registration message of the AI positioning model sent by the terminal may be carried in an MO-LR; or in an LPP message. For example, the LPP message may be an LPP provide capabilities message.

In an optional embodiment, the terminal sends the MO-LR message to the LMF network element. The MO-LR message includes the registration message of the AI positioning model. The LMF network element receives the MO-LR message and reads the registration message of the AI positioning model from the MO-LR message.

In another optional embodiment, the terminal sends the LPP message to the LMF network element. The LPP message includes the registration message of the AI positioning model. The LMF network element receives the LPP message and reads the registration message of the AI positioning model from the LPP message.

The AI positioning model is an AI model or a neural network model deployed by a terminal side and used in a positioning process. The positioning process includes: an uplink positioning process, a downlink positioning process, and an uplink and downlink positioning process. The AI positioning model may also be called a positioning model, an AI model, a neural network model, etc. The name of the model is not limited in the embodiments of the present disclosure. Correspondingly, the registration message of the AI positioning model may also be called an AI model registration message, a model registration message, and so on.

Optionally, the terminal may deploy a plurality of AI positioning models locally, and the registration message of the AI positioning model is used to register at least one AI positioning model deployed locally on the terminal with the LMF network element.

Optionally, the registration message of the AI positioning model includes at least one of:
a function of the AI positioning model;
a version of the AI positioning model;
an identifier of the AI positioning model; or
an application scenario of the AI positioning model.

Optionally, the registration message of the AI positioning model includes model information corresponding to at least one AI positioning model. The model information includes at least one of the function of the AI positioning model, the version of the AI positioning model, the identifier of the AI positioning model, or the application scenario of the AI positioning model.

In summary, in the method of the embodiments of the present disclosure, the terminal registers an AI positioning model deployed locally on the terminal with the LMF network element by sending the registration message of the AI positioning model to the LMF network element, so that the LMF network element may obtain relevant information about the AI positioning model deployed locally on the terminal, which facilitates the LMF network element to manage the AI positioning model deployed on the terminal.

**2. The terminal registers the AI positioning model with the AMF network element.**

FIG. 6 is a flowchart of a method for model management according to an exemplary embodiment of the present disclosure. This method may be applied to a terminal and an AMF network element. The method includes S302.

**At S302**, the terminal sends the registration message of the AI positioning model to the AMF network element, in which the registration message of the AI positioning model is configured to register the AI positioning model of the terminal with a network, in which the AI positioning model is applied to a positioning process.

The AMF network element receives the registration message of the AI positioning model sent by the terminal.

Optionally, the registration message of the AI positioning model sent by the terminal may be carried in the registration message, in which the registration message is a message sent to the AMF network element when the terminal registers with the network; or be carried in a supplementary service message.

In an optional embodiment, the terminal sends the registration message to the AMF network element. The registration message includes the registration message of the AI positioning model. Optionally, the registration message may also include relevant information about registration of the terminal. The AMF receives the registration message and reads the registration message of the AI positioning model from the registration message.

**In** another optional embodiment, the terminal sends the supplementary service message to the AMF network element. The supplementary service message includes the registration message of the AI positioning model. The AMF network element receives the supplementary service message and reads the registration message of the AI positioning model from the supplementary service message.

The AI positioning model is an AI model or a neural network model deployed by a terminal side and used in a positioning process. The positioning process includes: an uplink positioning process, a downlink positioning process, and an uplink and downlink positioning process. The AI positioning model may also be called a positioning model, an AI model, a neural network model, etc. The name of the model is not limited in the embodiments of the present disclosure. Correspondingly, the registration message of the AI positioning model may also be called an AI model registration message, a model registration message, and so on.

Optionally, the terminal may deploy a plurality of AI positioning models locally, and the registration message of the AI positioning model is used to register at least one AI positioning model deployed locally on the terminal with the AMF network element.

Optionally, the registration message of the AI positioning model includes at least one of:
a function of the AI positioning model;
a version of the AI positioning model;
an identifier of the AI positioning model; or
an application scenario of the AI positioning model.

Optionally, the registration message of the AI positioning model includes model information corresponding to at least one AI positioning model. The model information includes at least one of the function of the AI positioning model, the version of the AI positioning model, the identifier of the AI positioning model, or the application scenario of the AI positioning model.

Optionally, after receiving the registration message of the AI positioning model sent by the terminal, the AMF network element may also send the registration message of the AI positioning model to the LMF network element.

**2.1 The AMF network element sends the registration message of the AI positioning model to the LMF network element.**

FIG. 7 is a flowchart of a method for model management according to an exemplary embodiment of the present disclosure. This method may be applied to a terminal, an AMF network element, and an LMF network element. Based on the method in FIG. 6, the method further includes S303 after S302.

**At S303,** the AMF network element sends the registration message of the AI positioning model to the LMF network element.

The LMF network element receives the registration message of the AI positioning model of the terminal sent by the AMF network element.

Optionally, the registration message of the AI positioning model in S302 may be the same as or different from the registration message of the AI positioning model in S303, but both registration messages of the AI positioning model are used to register the AI positioning model of the terminal. For example, the registration message of the AI positioning model in S302 may be called a first registration message of a AI positioning model, which is used to register the AI positioning model of the terminal with the AMF network element. The registration message of the AI positioning model in S303 may be called a second registration message of a AI positioning model, which is used to register the AI positioning model of the terminal with the LMF network element.

Optionally, the first registration message of the AI positioning model is the same as, or partially the same as, or different from the second registration message of the AI positioning model.

For example, the first registration message of the AI positioning model includes relevant information about a first AI positioning model and relevant information about a second AI positioning model; and the second registration message of the AI positioning model includes the relevant information about the first AI positioning model.

For another example, the terminal may send a plurality of registration messages of the AI positioning model to the AMF network element, so as to register a plurality of AI positioning models with the AMF. The AMF network element may select registration messages of some AI positioning models from the plurality of registration messages of the AI positioning model and send them to the LMF network element.

Optionally, after receiving the registration message of the AI positioning model of the terminal, the AMF network element may register the AI positioning model of the terminal with the LMF network element when the positioning process is triggered. For example, when the AMF network element receives a positioning request of the terminal or triggers a positioning request of the terminal, the AMF network element sends the registration message of the AI positioning model of the terminal to the LMF network element.

That is, when the AMF network element receives the positioning request of the terminal, the AMF network element sends the registration message of the AI positioning model of the terminal to the LMF network element; or, when the AMF network element triggers the positioning request of the terminal, the AMF network element sends the registration message of the AI positioning model of the terminal to the LMF network element.

Optionally, each of S302 and S303 may be implemented independently as a single embodiment.

In summary, in the method of the embodiments of the present disclosure, the terminal registers an AI positioning model deployed locally on the terminal with the AMF network element by sending the registration message of the AI positioning model to the AMF network element, so that the AMF network element may obtain relevant information about the AI positioning model deployed locally on the terminal, which facilitates the AMF network element to manage the AI positioning model deployed on the terminal.

In the embodiments of the present disclosure, the AMF network element may register the AI positioning model deployed locally on the terminal with the LMF network element by sending the registration message of the AI positioning model of the terminal to the LMF network element, so that the LMF network element may obtain relevant information about the AI positioning model deployed locally on the terminal, which facilitates the LMF network element to manage the AI positioning model deployed on the terminal.

**3. The terminal registers the AI positioning model with the access network device.**

FIG. 8 is a flowchart of a method for model management according to an exemplary embodiment of the present disclosure. This method may be applied to a terminal and an access network device. The method includes S304.

**At S304**, the terminal sends the registration message of the AI positioning model to the access network device, in which the registration message of the AI positioning model is configured to register the AI positioning model of the terminal with a network, in which the AI positioning model is applied to a positioning process.

The access network device receives the registration message of the AI positioning model sent by the terminal.

Optionally, the registration message of the AI positioning model sent by the terminal is carried in an RRC message, for example, in positioning assistance information.

In an optional embodiment, the terminal sends the RRC message to the access network device. The RRC message includes the registration message of the AI positioning model. The access network device receives the RRC message and reads the registration message of the AI positioning model from the RRC message.

In another optional embodiment, the terminal sends the RRC message to the access network device. The RRC message includes positioning assistance information, and the positioning assistance information includes the registration message of the AI positioning model. The access network device receives the RRC message and reads the registration message of the AI positioning model from the RRC message.

The AI positioning model is an AI model or a neural network model deployed by a terminal side and used in a positioning process. The positioning process includes: an uplink positioning process, a downlink positioning process, and an uplink and downlink positioning process. The AI positioning model may also be called a positioning model, an AI model, a neural network model, etc. The name of the model is not limited in the embodiments of the present disclosure. Correspondingly, the registration message of the AI positioning model may also be called an AI model registration message, a model registration message, and so on.

Optionally, the terminal may deploy a plurality of AI positioning models locally, and the registration message of the AI positioning model is used to register at least one AI positioning model deployed locally on the terminal with the access network device.

Optionally, the registration message of the AI positioning model includes at least one of:
a function of the AI positioning model;
a version of the AI positioning model;
an identifier of the AI positioning model; or
an application scenario of the AI positioning model.

Optionally, the registration message of the AI positioning model includes model information corresponding to at least one AI positioning model. The model information includes at least one of the function of the AI positioning model, the version of the AI positioning model, the identifier of the AI positioning model, or the application scenario of the AI positioning model.

Optionally, after receiving the registration message of the AI positioning model sent by the terminal, the access network device may also send the registration message of the AI positioning model of the terminal to the LMF network element.

**3.1 The access network device sends the registration message of the AI positioning model of the terminal to the LMF network element.**

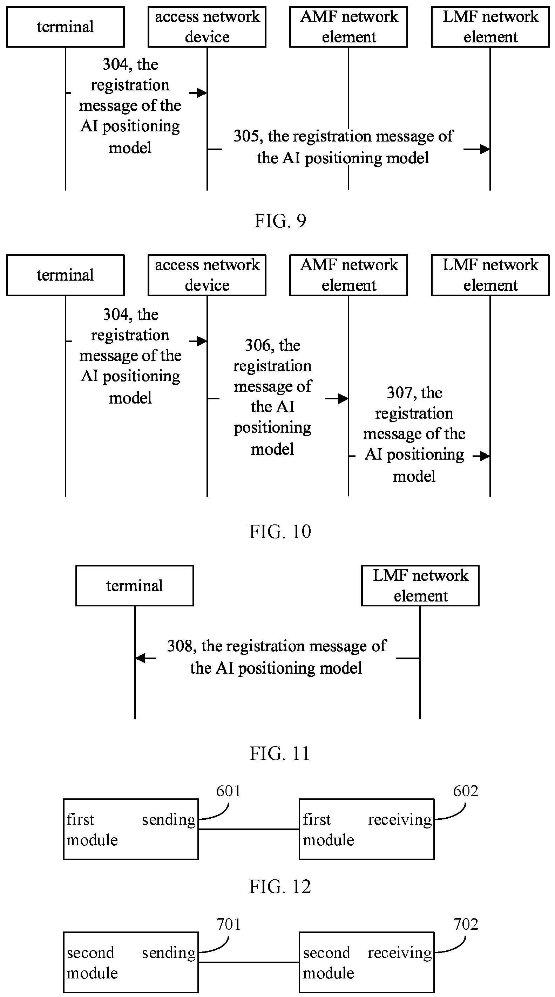

FIG. 9 is a flowchart of a method for model management according to an exemplary embodiment of the present disclosure. This method may be applied to a terminal, an access network device, and an LMF network element. Based on the method in FIG. 8, the method further includes S305 after S304.

**At S305,** the access network device sends the registration message of the AI positioning model to the LMF network element.

The LMF network element receives the registration message of the AI positioning model of the terminal sent by the access network device.

Optionally, the registration message of the AI positioning model sent by the access network device to the LMF network element is carried in an NR positioning protocol A (NRPPa) message.

In an optional embodiment, the access network device sends the NRPPa message to the LMF network element. The NRPPa message includes the registration message of the AI positioning model of the terminal. The LMF network element receives the NRPPa message and reads the registration message of the AI positioning model from the NRPPa message.

Optionally, the registration message of the AI positioning model in S304 may be the same as or different from the registration message of the AI positioning model in S305, but both registration messages of the AI positioning model are used to register the AI positioning model of the terminal. For example, the registration message of the AI positioning model in S304 may be called a third registration message of a AI positioning model, which is used to register the AI positioning model of the terminal with the access network device. The registration message of the AI positioning model in S305 may be called a fourth registration message of a AI positioning model, which is used to register the AI positioning model of the terminal with the LMF network element.

Optionally, the third registration message of the AI positioning model is the same as, or partially the same as, or different from the fourth registration message of the AI positioning model.

For example, the third registration message of the AI positioning model includes relevant information about the first AI positioning model and relevant information about the second AI positioning model; and the fourth registration message of the AI positioning model includes the relevant information about the first AI positioning model.

For another example, the terminal may send a plurality of registration messages of the AI positioning model to the access network device, so as to register a plurality of AI positioning models with the access network device. The access network device may select registration messages of some AI positioning models from the plurality of registration messages of the AI positioning model and send them to the LMF network element.

Optionally, each of S304 and S305 may be implemented independently as a single embodiment.

Optionally, after receiving the registration message of the AI positioning model sent by the terminal, the access network device may also send the registration message of the AI positioning model of the terminal to the AMF network element.

**3.2 The access network device sends the registration message of the AI positioning model of the terminal to the AMF network element.**

FIG. 10 is a flowchart of a method for model management according to an exemplary embodiment of the present disclosure. This method may be applied to a terminal, an access network device, and an LMF network element. Based on the method in FIG. 8, the method further includes S306 after S304.

**At S306**, the access network device sends the registration message of the AI positioning model to the AMF network element.

The AMF network element receives the registration message of the AI positioning model of the terminal sent by the access network device.

Optionally, the registration message of the AI positioning model in S304 may be the same as or different from the registration message of the AI positioning model in S305, but both registration messages of the AI positioning model are used to register the AI positioning model of the terminal. For example, the registration message of the AI positioning model in S304 may be called a third registration message of a AI positioning model, which is used to register the AI positioning model of the terminal with the access network device. The registration message of the AI positioning model in S306 may be called a fifth registration message of a AI positioning model, which is used to register the AI positioning model of the terminal with the AMF network element.

Optionally, the third registration message of the AI positioning model is the same as, or partially the same as, or different from the fifth registration message of the AI positioning model.

For example, the third registration message of the AI positioning model includes relevant information about the first AI positioning model and relevant information about the second AI positioning model; and the fifth registration message of the AI positioning model includes the relevant information about the first AI positioning model.

For another example, the terminal may send a plurality of registration messages of the AI positioning model to the access network device, so as to register a plurality of AI positioning models with the access network device. The access network device may select registration messages of some AI positioning models from the plurality of registration messages of the AI positioning model and send them to the AMF network element.

Optionally, after receiving the registration message of the AI positioning model sent by the terminal, the AMF network element may also send the registration message of the AI positioning model of the terminal to the LMF network element.

**3.2.1 The AMF network element sends the registration message of the AI positioning model of the terminal to the LMF network element.**

FIG. 10 is a flowchart of a method for model management according to an exemplary embodiment of the present disclosure. This method may be applied to a terminal, an access network device, and an LMF network element. Based on the method in FIG. 8, the method further includes S306 and S307 after S304.

**At S307,** the AMF network element sends the registration message of the AI positioning model to the LMF network element.

The LMF network element receives the registration message of the AI positioning model of the terminal sent by the AMF network element.

Optionally, the registration message of the AI positioning model in S306 may be the same as or different from the registration message of the AI positioning model in S307, but both registration messages of the AI positioning model are used to register the AI positioning model of the terminal. For example, the registration message of the AI positioning model in S306 may be called a fifth registration message of a AI positioning model, which is used to register the AI positioning model of the terminal with the AMF network element. The registration message of the AI positioning model in S307 may be called a second registration message of a AI positioning model, which is used to register the AI positioning model of the terminal with the LMF network element.

Optionally, the fifth registration message of the AI positioning model is the same as, or partially the same as, or different from the second registration message of the AI positioning model.

For example, the fifth registration message of the AI positioning model includes relevant information about the first AI positioning model and relevant information about the second AI positioning model; and the second registration message of the AI positioning model includes the relevant information about the first AI positioning model.

For another example, the access network device may send a plurality of registration messages of the AI positioning model of the terminal to the AMF network element, so as to register a plurality of AI positioning models with the AMF. The AMF network element may select registration messages of some AI positioning models from the plurality of registration messages of the AI positioning model and send them to the LMF network element.

Optionally, after receiving the registration message of the AI positioning model sent by the access network device, the AMF network element may register the AI positioning model of the terminal with the LMF network element when the positioning process is triggered. For example, when the AMF network element receives a positioning request of the terminal or triggers a positioning request of the terminal, the AMF network element sends the registration message of the AI positioning model to the LMF network element.

That is, when the AMF network element receives the positioning request of the terminal, the AMF network element sends the registration message of the AI positioning model of the terminal to the LMF network element; or, when the AMF network element triggers the positioning request of the terminal, the AMF network element sends the registration message of the AI positioning model of the terminal to the LMF network element.

Optionally, S304 and S306 may be implemented as a single embodiment; and S304, S306 and S307 may be implemented as a single embodiment. Of course, each of S304, S306 and S307 may be implemented independently as a single embodiment.

In summary, in the method of the embodiments of the present disclosure, the terminal registers an AI positioning model deployed locally on the terminal with the access network device by sending the registration message of the AI positioning model to the access network device, so that the access network device may obtain relevant information about the AI positioning model deployed locally on the terminal, which facilitates the access network device to manage the AI positioning model deployed on the terminal.

In the embodiments of the present disclosure, the access network device may register the AI positioning model deployed locally on the terminal with the LMF network element by sending the registration message of the AI positioning model of the terminal to the LMF network element, so that the LMF network element may obtain relevant information about the AI positioning model deployed locally on the terminal, which facilitates the LMF network element to manage the AI positioning model deployed on the terminal.

In the embodiments of the present disclosure, the access network device may register the AI positioning model deployed locally on the terminal with the AMF network element by sending the registration message of the AI positioning model of the terminal to the AMF network element, so that the AMF network element may obtain relevant information about the AI positioning model deployed locally on the terminal, which facilitates the AMF network element to manage the AI positioning model deployed on the terminal.

Exemplarily, after the terminal registers the AI positioning model with a network side, the network side may manage the AI positioning model of the terminal.

FIG. 11 is a flowchart of a method for model management according to an exemplary embodiment of the present disclosure. This method may be applied to a terminal and an LMF network element. The method includes S308.

**At S308,** the LMF network element sends indication information of the AI positioning model to the terminal.

After receiving the registration message of the AI positioning model of the terminal, the LMF network element completes registration of the AI positioning model deployed locally on the terminal. The LMF network element may then manage the AI positioning model deployed locally on the terminal.

After receiving the registration message of the AI positioning model, the LMF network element may activate/deactivate/switch/update the AI positioning model of the terminal according to the registration message of the AI positioning model. For example, the UE may be indicated to complete activation/deactivation/switch/update of the AI positioning model via a model identifier of the AI positioning model.

Activating the AI positioning model refers to that the LMF network element indicates the terminal to use an activated AI positioning model.

Deactivating the AI positioning model refers to that the LMF network element indicates the terminal to stop using a deactivated AI positioning model.

Switching the AI positioning model refers to that the LMF network element indicates the terminal to stop using a current AI positioning model (the AI positioning model being switched) and use an AI positioning model after switching (a new AI positioning model) indicated by the LMF network element.

Updating the AI positioning model refers to that the LMF network element indicates the terminal to update a parameter of the current AI positioning model, or to use a different version of the current AI positioning model.

For example, the LMF network element may send the indication information of the AI positioning model to the terminal; and the terminal receives the indication information of the AI positioning model and processes the local AI positioning model according to the indication information of the AI positioning model.

The indication information of the AI positioning model is configured to manage the AI positioning model deployed locally on the terminal.

For example, the indication information of the AI positioning model is used to activate the AI positioning model of the terminal, and/or, the indication information of the AI positioning model is configured to deactivate the AI positioning model of the terminal, and/or, the indication information of the AI positioning model is configured to switch the AI positioning model of the terminal, and/or, the indication information of the AI positioning model is configured to update the AI positioning model of the terminal.

Optionally, the indication information of the AI positioning model is used to manage at least one AI positioning model deployed locally on the terminal. Optionally, different management operations (activation/deactivation/switch/update) may be performed for different AI positioning models according to the indication information of the AI positioning model. Optionally, a same management operation (activation/deactivation/switch/update) may be performed for different AI positioning models according to the indication information of the AI positioning model.

Optionally, the indication information of the AI positioning model may also be divided into: an AI positioning model activation indication, an AI positioning model deactivation indication, an AI positioning model switching indication, an AI positioning model updating indication.

The LMF network element sends the AI positioning model activation indication to the terminal, in which the AI positioning model activation indication includes at least one model identifier of AI positioning models; and the terminal receives the AI positioning model activation indication sent by the LMF network element and activates a corresponding AI positioning model according to the model identifier in the AI positioning model activation indication;
and/or, the LMF network element sends the AI positioning model deactivation indication to the terminal, in which the AI positioning model deactivation indication includes at least one model identifier of AI positioning models; and the terminal receives the AI positioning model deactivation indication sent by the LMF network element and deactivates a corresponding AI positioning model according to the model identifier in the AI positioning model deactivation indication;
and/or, the LMF network element sends the AI positioning model switching indication to the terminal, in which the AI positioning model switching indication includes at least one group of model identifiers of AI positioning models, and each group of model identifiers of AI positioning models are divided into a model identifier being switched and a new model identifier; and the terminal receives the AI positioning model switching indication sent by the LMF network element, and switches an AI positioning model corresponding to the model identifier being switched to an AI positioning model corresponding to the new model identifier according to each group of model identifiers in the AI positioning model switching indication ;
and/or, the LMF network element sends the AI positioning model updating indication to the terminal, in which the AI positioning model updating indication includes at least one model identifier of AI positioning models; and the terminal receives the AI positioning model updating indication sent by the LMF network element and updates a corresponding AI positioning model according to the model identifier in the AI positioning model updating indication.

For example, the LMF network element may send the AI positioning model activation indication to the terminal. When the AI positioning model activation indication includes a model identifier of the first AI positioning model and a model identifier of the second AI positioning model, it is indicated to activate the first AI positioning model and the second AI positioning model.

Optionally, S308 shown in FIG. 11 may be combined with any step in above embodiments as a new embodiment.

For example, S301 and S308 may be combined into a new embodiment. S302, S303, and S308 may be combined into a new embodiment. S303 and S308 may be combined into a new embodiment. S304, S305, and S308 may be combined into a new embodiment. S305 and S308 may be combined into a new embodiment. S304, S306, S307, and S308 may be combined into a new embodiment. S306, S307, and S308 may be combined into a new embodiment. S307 and S308 may be combined into a new embodiment.

In summary, in the method of the embodiments of the present disclosure, the LMF network element may manage an AI positioning model deployed locally on the terminal after registering the AI positioning model deployed locally on the terminal, and the AI positioning model of the terminal may be activated/deactivated/switched/updated by sending the indication information of the AI positioning model to the terminal.

It needs to be noted that an order of steps of the method in the embodiments of the present disclosure may be appropriately adjusted, the steps may also be increased or decreased according to situations, and different steps may be freely combined to form a new embodiment. Changes that may be easily considered by those skilled in the art shall be contained within the protection scope of the present disclosure. Therefore, the protection scope of the disclosure shall be subject to the protection scope of claims, which will not be repeated.

FIG. 12 is a block diagram of an apparatus for model management according to an exemplary embodiment of the present disclosure. As shown in FIG. 12, the apparatus includes:
**a** first sending module 601, configured to send a registration message of an AI positioning model, in which the registration message of the AI positioning model is configured to register the AI positioning model of the terminal with a network, in which the AI positioning model is applied to a positioning process.

In an optional embodiment, the registration message of the AI positioning model includes at least one of:
a function of the AI positioning model;
a version of the AI positioning model;
an identifier of the AI positioning model; or
an application scenario of the AI positioning model.

In an optional embodiment, the first sending module 601 is configured to send the registration message of the AI positioning model to an LMF network element.

In an optional embodiment, the first sending module 601 is configured to send the registration message of the AI positioning model to an AMF network element.

In an optional embodiment, the first sending module 601 is configured to send the registration message of the AI positioning model to an access network device.

In an optional embodiment, the apparatus further includes:
a first receiving module 602, configured to receive indication information of the AI positioning model.

The indication information of the AI positioning model is configured to activate the AI positioning model of the terminal, and/or, the indication information of the AI positioning model is configured to deactivate the AI positioning model of the terminal, and/or, the indication information of the AI positioning model is configured to switch the AI positioning model of the terminal, and/or, the indication information of the AI positioning model is configured to update the AI positioning model of the terminal.

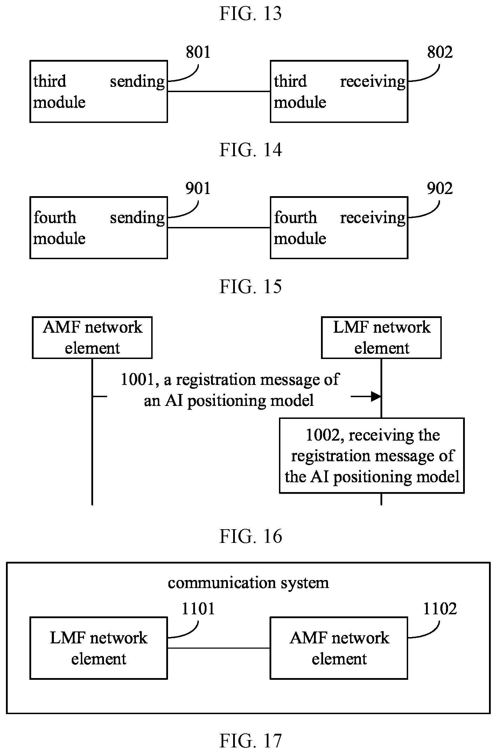

FIG. 13 is a block diagram of an apparatus for model management according to an exemplary embodiment of the present disclosure. As shown in FIG. 13, the apparatus includes:
a second receiving module 702, configured to receive a registration message of an AI positioning model, in which the registration message of the AI positioning model is configured to register the AI positioning model of a terminal with a network, in which the AI positioning model is applied to a positioning process.

In an optional embodiment, the registration message of the AI positioning model includes at least one of:
a function of the AI positioning model;
a version of the AI positioning model;
an identifier of the AI positioning model; or
an application scenario of the AI positioning model.

In an optional embodiment, the second receiving module 702 is configured to receive the registration message of the AI positioning model sent by the terminal.

In an optional embodiment, the second receiving module 702 is configured to receive the registration message of the AI positioning model of the terminal sent by an AMF network element.

In an optional embodiment, the registration message of the AI positioning model is sent in case that the AMF network element receives a positioning request of the terminal; or,
the registration message of the AI positioning model is sent in case that the AMF network element triggers a positioning request of the terminal.

In an optional embodiment, the second receiving module 702 is configured to receive the registration message of the AI positioning model of the terminal sent by an access network device.

In an optional embodiment, the apparatus includes:
a second sending module 701, configured to send indication information of the AI positioning model based on the registration message of the AI positioning model.

The indication information of the AI positioning model is configured to activate the AI positioning model of the terminal, and/or, the indication information of the AI positioning model is configured to deactivate the AI positioning model of the terminal, and/or, the indication information of the AI positioning model is configured to switch the AI positioning model of the terminal, and/or, the indication information of the AI positioning model is configured to update the AI positioning model of the terminal.

FIG. 14 is a block diagram of an apparatus for model management according to an exemplary embodiment of the present disclosure. As shown in FIG. 14, the apparatus includes:
a third receiving module 802, configured to receive a registration message of an AI positioning model, in which the registration message of the AI positioning model is configured to register the AI positioning model of a terminal with a network, in which the AI positioning model is applied to a positioning process.

In an optional embodiment, the registration message of the AI positioning model includes at least one of:
a function of the AI positioning model;
a version of the AI positioning model;
an identifier of the AI positioning model; or
an application scenario of the AI positioning model.

In an optional embodiment, the third receiving module 802 is configured to receive the registration message of the AI positioning model sent by the terminal.

In an optional embodiment, the apparatus further includes:
a third sending module 801, configured to send the registration message of the AI positioning model of the terminal to an LMF network element.

In an optional embodiment, the third receiving module 802 is configured to, in case of receiving a positioning request of the terminal, send the registration message of the AI positioning model of the terminal to an LMF network element; or,

in case of triggering a positioning request of the terminal, send the registration message of the AI positioning model of the terminal to an LMF network element.

FIG. 15 is a block diagram of an apparatus for model management according to an exemplary embodiment of the present disclosure. As shown in FIG. 15, the apparatus includes:
a fourth receiving module 902, configured to receive a registration message of an AI positioning model, in which the registration message of the AI positioning model is configured to register the AI positioning model of a terminal with a network, in which the AI positioning model is applied to a positioning process.

In an optional embodiment, the registration message of the AI positioning model includes at least one of:
a function of the AI positioning model;
a version of the AI positioning model;
an identifier of the AI positioning model; or
an application scenario of the AI positioning model.

**In** an optional embodiment, the fourth receiving module 902 is configured to receive the registration message of the AI positioning model sent by the terminal.

In an optional embodiment, the apparatus further includes:
a fourth sending module 901, configured to send the registration message of the AI positioning model of the terminal to an LMF network element.

In an optional embodiment, the apparatus further includes:
a fourth sending module 901, configured to send the registration message of the AI positioning model of the terminal to an AMF network element.

It needs to be noted that, when the apparatus in above embodiments realizes its function, a division of each functional module described above is set as an example. In a practical application, according to actual needs, above functions are assigned by different functional modules, that is, a content structure of the apparatus is divided into different functional modules so as to complete all or part of the functions described above.

With respect to the apparatus in the above embodiments, specific implementations in which each module performs an operation has been described in detail in the method embodiments and will not be elaborated here.

FIG. 16 is a flowchart of a communication method according to an exemplary embodiment of the present disclosure. This method may be applied to a core network device, including an LMF network element and an AMF network element. The method includes S1001 and S1002.

**At S1001,** the AMF network element sends a registration message of an AI positioning model to the LMF network element, in which the registration message of the AI positioning model is configured to register the AI positioning model of a terminal with a network, in which the AI positioning model is applied to a positioning process.

**At S1002,** the LMF network element receives the registration message of the AI positioning model of the terminal sent by the AMF network element.

The AI positioning model is an AI model or a neural network model deployed by a terminal side and used in a positioning process. The positioning process includes: an uplink positioning process, a downlink positioning process, and an uplink and downlink positioning process. The AI positioning model may also be called a positioning model, an AI model, a neural network model, etc. The name of the model is not limited in the embodiments of the present disclosure. Correspondingly, the registration message of the AI positioning model may also be called an AI model registration message, a model registration message, and so on.

Optionally, the terminal may deploy a plurality of AI positioning models locally, and the registration message of the AI positioning model is used to register at least one AI positioning model deployed locally on the terminal with the LMF network element.

Optionally, the registration message of the AI positioning model includes at least one of:
a function of the AI positioning model;
a version of the AI positioning model;
an identifier of the AI positioning model; or
an application scenario of the AI positioning model.

Optionally, the registration message of the AI positioning model includes model information corresponding to at least one AI positioning model. The model information includes at least one of the function of the AI positioning model, the version of the AI positioning model, the identifier of the AI positioning model, or the application scenario of the AI positioning model.

Optionally, after receiving the registration message of the AI positioning model sent by the terminal, the AMF network element may also send the registration message of the AI positioning model of the terminal to the LMF network element.

Optionally, after receiving the registration message of the AI positioning model of the terminal, the AMF network element may register the AI positioning model of the terminal with the LMF network element when the positioning process is triggered. For example, when the AMF network element receives a positioning request of the terminal or triggers a positioning request of the terminal, the AMF network element sends the registration message of the AI positioning model to the LMF network element.

That is, when the AMF network element receives the positioning request of the terminal, the AMF network element sends the registration message of the AI positioning model of the terminal to the LMF network element; or, when the AMF network element triggers the positioning request of the terminal, the AMF network element sends the registration message of the AI positioning model of the terminal to the LMF network element.

In the embodiments of the present disclosure, the AMF network element may register the AI positioning model deployed locally on the terminal with the LMF network element by sending the registration message of the AI positioning model of the terminal to the LMF network element, so that the LMF network element may obtain relevant information about the AI positioning model deployed locally on the terminal, which facilitates the LMF network element to manage the AI positioning model deployed on the terminal.

FIG. 17 is a block diagram of a communication system according to an exemplary embodiment of the present disclosure. As shown in FIG. 17, the communication system includes an LMF network element 1101 and an AMF network element 1102.

The LMF network element 1101 is configured to implement steps performed by the LMF network element in each method embodiment above; and
the AMF network element 1102 is configured to implement steps performed by the AMF network element in each method embodiment above.

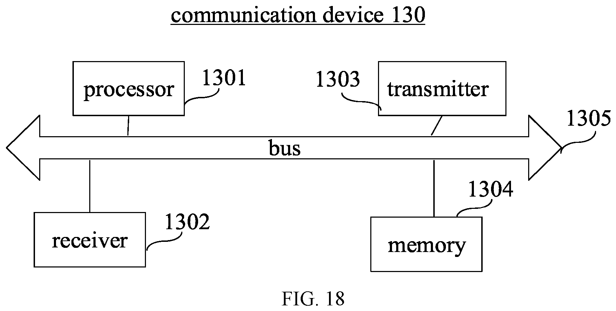

FIG. 18 is a block diagram of a communication device according to an exemplary embodiment of the present disclosure. The communication device 130 includes: a processor 1301, a receiver 1302, a transmitter 1303, a memory 1304 and a bus 1305.

The processor 1301 includes one or more processing cores. The processor 1301 performs various functional applications and information processing by running software programs and modules.

The receiver 1302 and the transmitter 1303 may be implemented as a communication component, and the communication component may be a communication chip.

The memory 1304 is connected to the processor 1301 by the bus 1305.

The memory 1304 may be used to store at least one instruction, and the processor 1301 is used to execute the at least one instruction to achieve various steps in an above method embodiment.

The memory 1304 may be implemented by any type of volatile or non-volatile storage device or a combination of them. The volatile or non-volatile storage device include, but is not limited to: a magnetic disk or an optical disk, an electrically erasable programmable read-only memory (EEPROM), an erasable programmable read-only memory (EPROM), an static random-access memory (SRAM), a read-only memory (ROM), a magnetic memory, a flash memory, and a programmable read-only memory (PROM).

When the communication device is implemented as a terminal, the processor and the transceiver in the communication device involved in the embodiments of the present disclosure may be collectively implemented as a communication chip, or the transceiver may independently form a communication chip. The transmitter in the transceiver performs sending steps implemented by the terminal in any one of above methods, the receiver in the transceiver performs receiving steps implemented by the terminal in any one of above methods, and the processor performs steps other than the sending steps and the receiving steps, which will not be repeated herein.

When the communication device is implemented as an LMF network element, the processor and the transceiver in the communication device involved in the embodiments of the present disclosure may be collectively implemented as a communication chip, or the transceiver may independently form a communication chip. The transmitter in the transceiver performs sending steps implemented by the LMF network element in any one of above methods, the receiver in the transceiver performs receiving steps implemented by the LMF network element in any one of above methods, and the processor performs steps other than the sending steps and the receiving steps, which will not be repeated herein.

When the communication device is implemented as an AMF network element, the processor and the transceiver in the communication device involved in the embodiments of the present disclosure may be collectively implemented as a communication chip, or the transceiver may independently form a communication chip. The transmitter in the transceiver performs sending steps implemented by the AMF network element in any one of above methods, the receiver in the transceiver performs receiving steps implemented by the AMF network element in any one of above methods, and the processor performs steps other than the sending steps and the receiving steps, which will not be repeated herein.

When the communication device is implemented as an access network device, the processor and the transceiver in the communication device involved in the embodiments of the present disclosure may be collectively implemented as a communication chip, or the transceiver may independently form a communication chip. The transmitter in the transceiver performs sending steps implemented by the access network device in any one of above methods, the receiver in the transceiver performs receiving steps implemented by the access network device in any one of above methods, and the processor performs steps other than the sending steps and the receiving steps, which will not be repeated herein.

In an exemplary embodiment, a computer readable storage medium is also provided. The computer readable storage medium is stored in at least one instruction, at least a program, a code set or an instruction set. The at least one instruction, the at least a program, a code set or an instruction set is loaded by the processor and executed to realize the method for model management in each method embodiment above.

In an exemplary embodiment, a chip is also provided. The chip includes a programmable logic circuit and/or a program instruction. When the chip is running on the communication device, the method for model management in each method embodiment above is implemented.

In an exemplary embodiment, a computer program product is also provided. When the computer program product is running on the processor of a computer device, the computer device is caused to implement the method for model management.

In an exemplary embodiment, a communication system is also provided. The communication system includes following network elements:
an LMF network element configured to implement the method for model management in any one of above method embodiments; and
an AMF network element configured to implement the method for model management in any one of the above method embodiments.

Those skilled in the art should appreciate that, in one or more examples above, functions described in the embodiments of the present disclosure may be implemented in hardware, software, firmware, or any combination of them. When the functions are implemented in software, the functions may be stored in a computer readable medium or transmitted as one or a plurality of instructions or codes on the computer readable medium. The computer readable medium includes both a computer storage medium and a communication medium, in which the communication medium includes any medium that facilitates a transfer of a computer program from one location to another. The storage medium may be any available medium that may be accessed by a general-purpose computer or a special-purpose computer.

The above embodiments are just exemplary embodiments of the present disclosure, and cannot be construed to limit the present disclosure. Changes, alternatives, and modifications may be made in the embodiments without departing from scope of the present disclosure.

## Claims

1. A method for model management, performed by a terminal, comprising:
sending a registration message of an artificial intelligence (AI) positioning model, wherein the registration message of the AI positioning model is configured to register the AI positioning model of the terminal with a network, wherein the AI positioning model is applied to a positioning process.

2. The method of claim 1, wherein the registration message of the AI positioning model comprises at least one of:
a function of the AI positioning model;
a version of the AI positioning model;
an identifier of the AI positioning model; or
an application scenario of the AI positioning model.

3. The method of claim 1 or 2, wherein sending the registration message of the AI positioning model comprises:
sending the registration message of the AI positioning model to a location management function (LMF) network element.

4. The method of claim 1 or 2, wherein sending the registration message of the AI positioning model comprises:
sending the registration message of the AI positioning model to an access and mobility management function (AMF) network element.

5. The method of claim 1 or 2, wherein sending the registration message of the AI positioning model comprises:
sending the registration message of the AI positioning model to an access network device.

6. The method of any one of claims 1 to 5, further comprising:
receiving indication information of the AI positioning model,
wherein the indication information of the AI positioning model is configured to activate the AI positioning model of the terminal, and/or, the indication information of the AI positioning model is configured to deactivate the AI positioning model of the terminal, and/or, the indication information of the AI positioning model is configured to switch the AI positioning model of the terminal, and/or, the indication information of the AI positioning model is configured to update the AI positioning model of the terminal.

7. A method for model management, performed by a location management function (LMF) network element, comprising:
receiving a registration message of an artificial intelligence (AI) positioning model, wherein the registration message of the AI positioning model is configured to register the AI positioning model of a terminal with a network, wherein the AI positioning model is applied to a positioning process.

8. The method of claim 7, wherein the registration message of the AI positioning model comprises at least one of:
a function of the AI positioning model;
a version of the AI positioning model;
an identifier of the AI positioning model; or
an application scenario of the AI positioning model.

9. The method of claim 7 or 8, wherein receiving the registration message of the AI positioning model comprises:
receiving the registration message of the AI positioning model sent by the terminal.

10. The method of claim 7 or 8, wherein receiving the registration message of the AI positioning model comprises:
receiving the registration message of the AI positioning model of the terminal sent by an access and mobility management function (AMF) network element.

11. The method of claim 10, wherein the registration message of the AI positioning model is sent in case that the AMF network element receives a positioning request of the terminal; or,
the registration message of the AI positioning model is sent in case that the AMF network element triggers a positioning request of the terminal.

12. The method of claim 7 or 8, wherein receiving the registration message of the AI positioning model comprises:
receiving the registration message of the AI positioning model of the terminal sent by an access network device.

13. The method of any one of claims 7 to 12, further comprising:
sending indication information of the AI positioning model based on the registration message of the AI positioning model,
wherein the indication information of the AI positioning model is configured to activate the AI positioning model of the terminal, and/or, the indication information of the AI positioning model is configured to deactivate the AI positioning model of the terminal, and/or, the indication information of the AI positioning model is configured to switch the AI positioning model of the terminal, and/or, the indication information of the AI positioning model is configured to update the AI positioning model of the terminal.

14. A method for model management, performed by an access and mobility management function (AMF) network element, comprising:
receiving a registration message of an artificial intelligence (AI) positioning model, wherein the registration message of the AI positioning model is configured to register the AI positioning model of a terminal with a network, wherein the AI positioning model is applied to a positioning process.

15. The method of claim 14, wherein the registration message of the AI positioning model comprises at least one of:
a function of the AI positioning model;
a version of the AI positioning model;
an identifier of the AI positioning model; or
an application scenario of the AI positioning model.

16. The method of claim 14 or 15, wherein receiving the registration message of the AI positioning model comprises:
receiving the registration message of the AI positioning model sent by the terminal.

17. The method of claim 16, further comprising:
sending the registration message of the AI positioning model of the terminal to a location management function (LMF) network element.

18. The method of claim 16, further comprising:
in case of receiving a positioning request of the terminal, sending the registration message of the AI positioning model of the terminal to an LMF network element; or,
in case of triggering a positioning request of the terminal, sending the registration message of the AI positioning model of the terminal to an LMF network element.

19. A method for model management, performed by an access network device, comprising:
receiving a registration message of an artificial intelligence (AI) positioning model, wherein the registration message of the AI positioning model is configured to register the AI positioning model of a terminal with a network, wherein the AI positioning model is applied to a positioning process.

20. The method of claim 19, wherein the registration message of the AI positioning model comprises at least one of:
a function of the AI positioning model;
a version of the AI positioning model;
an identifier of the AI positioning model; or
an application scenario of the AI positioning model.

21. The method of claim 19 or 20, wherein receiving the registration message of the AI positioning model comprises:
receiving the registration message of the AI positioning model sent by the terminal.

22. The method of claim 21, further comprising:
sending the registration message of the AI positioning model of the terminal to a location management function (LMF) network element.

23. The method of claim 21, further comprising:
sending the registration message of the AI positioning model of the terminal to an access and mobility management function (AMF) network element.

24. An apparatus for model management, comprising:
a first sending module, configured to send a registration message of an artificial intelligence (AI) positioning model, wherein the registration message of the AI positioning model is configured to register the AI positioning model of the terminal with a network, wherein the AI positioning model is applied to a positioning process.

25. An apparatus for model management, comprising:
a second receiving module, configured to receive a registration message of an artificial intelligence (AI) positioning model, wherein the registration message of the AI positioning model is configured to register the AI positioning model of a terminal with a network, wherein the AI positioning model is applied to a positioning process.

26. An apparatus for model management, comprising:
a third receiving module, configured to receive a registration message of an artificial intelligence (AI) positioning model, wherein the registration message of the AI positioning model is configured to register the AI positioning model of a terminal with a network, wherein the AI positioning model is applied to a positioning process.

27. An apparatus for model management, comprising:
a fourth receiving module, configured to receive a registration message of an artificial intelligence (AI) positioning model, wherein the registration message of the AI positioning model is configured to register the AI positioning model of a terminal with a network, wherein the AI positioning model is applied to a positioning process.

28. A terminal, comprising:
a processor;
a transceiver connected to the processor; and
a memory for storing instructions executable by the processor,
wherein the processor is configured to load and execute the instructions to implement the method of any one of claims 1 to 6.

29. An access network device, comprising:
a processor;
a transceiver connected to the processor; and
a memory for storing instructions executable by the processor,
wherein the processor is configured to load and execute the instructions to implement the method of any one of claims 19 to 23.

30. A computer readable storage medium for storing executable instructions, wherein when the executable instructions are loaded and executed by a processor, the method of any one of claims 1 to 23 is implemented.

31. A communication method, comprising:
sending by an access and mobility management function (AMF) network element, a registration message of an artificial intelligence (AI) positioning model to a location management function (LMF) network element, wherein the registration message of the AI positioning model is configured to register the AI positioning model of a terminal with a network, wherein the AI positioning model is applied to a positioning process; and
receiving by the LMF network element, the registration message of the AI positioning model of the terminal sent by the AMF network element.

32. A communication system, comprising:
a location management function (LMF) network element, configured to implement the method of any one of claims 7 to 13; and
an access and mobility management function (AMF) network element, configured to implement the method of any one of claims 14 to 18.
